# EUROPEAN PATENT SPECIFICATION

(11) **EP 3 760 808 B1**
(45) Date of publication and mention of the grant of the patent: **07.02.2024**
(21) Application number: 19761653.5
(22) Date of filing: 01.03.2019
(51) Int. Cl.: E04F 13/072, B44F 1/06, E04F 13/08, B44F 1/10

(54) **DECORATIVE TILE WITH STEREOSCOPIC IMAGE DISPLAY**
DEKORATIVE FLIESE MIT STEREOSKOPISCHER BILDANZEIGE
CARREAU DÉCORATIF AVEC REPRÉSENTATION STÉRÉOSCOPIQUE

(30) Priority: 02.03.2018 RU 2018107728
(43) Date of publication of application: 06.01.2021
(73) Proprietor: Limited Liability Company "3D Stile", Moscow, 121205 (RU)
(72) Inventor: KRIVOLAPOV, Konstantin Evgenievich, Belgorod, 303033 (RU)
(74) Representative: Chimini, Francesco
(86) International application number: PCT/RU2019/050022
(87) International publication number: WO 2019/168447

(56) References cited:
- EP-A2- 1 000 771
- DE-A1-102005 005 098
- RU-C2- 2 358 884
- RU-U1- 74 145
- RU-U1- 159 694
- US-A1- 2004 252 378
- US-B1- 9 507 162
- US-B2- 8 915 035

## Description

### FIELD OF INVENTION

The invention relates to a material for facing of buildings and premises. More specifically the invention refers to a decorative tile with a stereoscopic display.

### BACKGROUND

Currently, there are natural and artificial materials intended for the lining of premises and buildings. An example of such material is the image display device described in RU 2358884 C2, published 20.06.2009 on 20 pages, CL. B44F 1/06. This display device reveals a substrate on which there is a shaped reflecting surface that forms the displayed image in the form of a bas-relief, and a glaze that covers the top of the shaped reflecting surface. However, this device does not provide three-dimensional (stereoscopic) image display. Moreover, the mentioned glaze layer has a minimum level of protection of the mentioned substrate.

DE102005005098A1 discloses tiles and wall decorating units manufacturing method involves providing a three-dimensional image on a foil, which is fixed on a base plate. A highly transparent link layer on the base plate acts as a UV filter. A circular refracting unit and refracting units with lenses are provided vertically on the link layer, such that the light beam incident on the refracting units is refracted and dispersed. The edges of tiles and wall decoration units are sealed. US8915035B2A discloses a laminated floor tile including, laminated together into a single unit, a base having an underside, an upper surface, and perimetric edges, the base being formed of a high impact copolymer material designed to provide a slight flexure, the base including tabs designed to interact with adjacent floor tiles to hold the adjacent tiles fixedly in place, and panels extending upwardly from the perimetric edges of the base and forming the upper surface into a tray shape, graphic media positioned on the base within the tray, and a clear protective layer overlying the graphic images.

### SUMMARY

The task solved by the invention as defined in claim 1 is to create a durable product intended for facing both buildings and premises, and providing a three-dimensional and dynamic display images on this product

The technical result of the proposed invention is expanding the arsenal of technical tools that allow you to apply images with stereoscopic and dynam ic display.

The specified technical result is achieved by decorative tile with stereoscopic and dynamic display, including: a front protective transparent plate that has external and internal side; end protective layer; transparent film; rear protective layer having an external and internal side; stereoscopic image; lenticular sheet located above stereoscopic image, while: the inner side of the front protective transparent plate is connected to a transparent film, and its edges are connected to the end protective layer, which, in turn, is connected to the rear protective layer, the rear protective layer of its the inner side is connected to the stereoscopic image, above where the lenticular sheet is located, where between the mentioned lenticular sheet and transparent film is air gap that provide stereoscopic and dynamic display of a stereoscopic image, with the mentioned the transparent film is made with the possibility of providing additional the strength of the mentioned front protective transparent plate and UV protection of the stereoscopic image, and the front protective transparent plate, the end protective layer and the back protective layer form a single hermetic protective housing, which contains the mentioned stereoscopic image, transparent film and lenticular sheet.

Decorative tile with stereoscopic and dynamic the display is resistant to external influences. Obviously, both the previous general description and the subsequent detailed description given only for example and explanation and are not limitations of this invention.

### BRIEF DESCRIPTION OF FIGURES

Fig. 1 shows a general view of decorative tile in accordance with the claimed solution.
Fig. 2 shows a general view of the second version decorative tile.
Fig.3 shows a general view of the third version decorative tile.
Fig.4 shows a general view of the fourth version decorative tile.

### DESCRIPTION OF SOME EMBODIMENTS

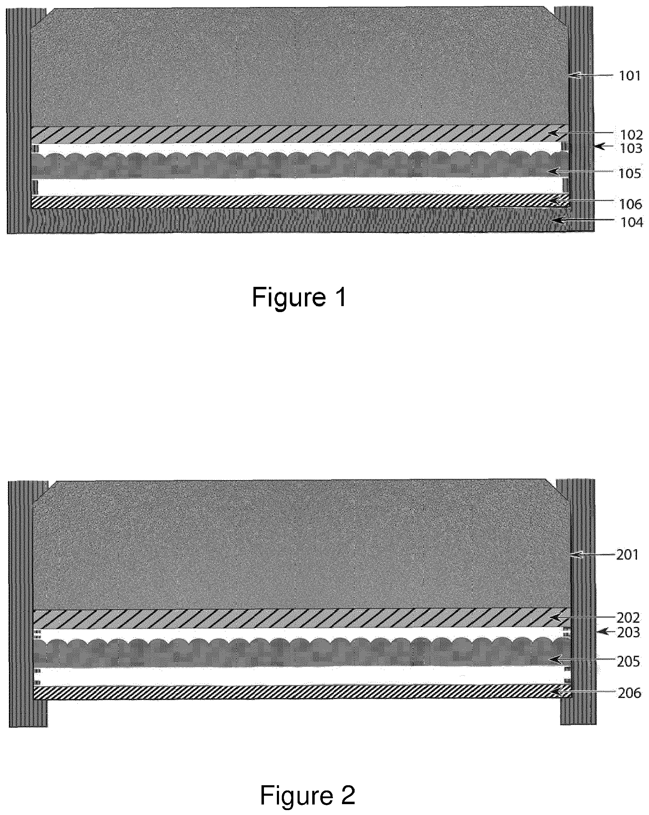

Further with reference to Fig. 1 a decorative tile with stereoscopic and dynamic display will be described in accordance with the declared decision. Decorative tile with stereoscopic and dynamic display consists of a front protective transparent plates 101, transparent film 102, end protective layer 103, back protective layer 104, lenticular sheet 105, and stereoscopic image 106.

The front protective transparent plate 101 has two sides: external and internal. The external side is the external surface of the decorative tile. The internal side of the mentioned plate is connected with transparent film 102. At the edges of the mentioned plate is connected to the end protective layer 103. The front protective transparent plate can be made of various materials (for example, glass, plastic, etc.) and, in combination with the end protective layer and the rear protective layer, provides protection of the lenticular sheet and stereoscopic image are located under them from external influences. The front protective transparent plate 101 can be covered with optically transparent laminate, protective compounds and / or additionally processed (for example, glass hardening).
During exploitation, the external side of the mentioned plate may be subjected to polishing and other types of restoration work without deterioration of the perception of the three-dimensional and dynamic effects and appearance of products.

The end protective layer 103 can be made of metal, plastic, film, grid, ceramic, paper, wood, resin, paint coatings and / or similar materials.

The rear protective layer 104 also has two sides: the external and internal. The external side is the external surface of decorative tiles and provides fixing of decorative tiles to different surfaces. Collectively referred to as facial protection transparent plate 101, end protective layer 103 and rear protective layer 104 forms a single sealed protective housing in which are located the above-mentioned stereoscopic image 106, transparent film 102 and lenticular sheet 105.

The rear protective layer 104 can be made of metal, plastic, film, grid, ceramic, paper, wood, resin, paint coatings and / or similar materials.

The mentioned transparent film 102 is attached to the internal side of the front protective transparent plate 101 and provides additional strength of the mentioned plate 101 and UV protection of the stereoscopic image 106.

The lenticular sheet 105 is located above the stereoscopic image 106. At the same time, the lenticular sheet is positioned in such a way that on the one side between it and the transparent film 102 and on the other side between it and the stereoscopic image 106 are air gaps, that provide stereoscopic and dynam ic display of a stereoscopic image 106. The lenticular sheet 105 consists of lens elements that can be manufactured from mirror-glossy plastics, silicate glass and other materials, 0.05 mm or more thick.

The mentioned stereoscopic image 106 is attached to the internal side of the rear protective layer 104. Stereoscopic image is a drawing that includes parts of two or more
whole images that are displayed separately under the influence of the lenticular sheet 105 depending on the viewing angle, or a drawing that includes parts of a three-dimensional image, the different visual planes of which are also displayed separately under the influence of the lenticular sheet 105 depending on the viewing angle.

Further with reference to Fig. 2 it will be given an another example of implementation of decorative tile with stereoscopic and dynamic display. Decorative tiles with stereoscopic and dynamic display consists of a front protective transparent plate 201, transparent film 202, end protective layer 203, lenticular sheet 205 and stereoscopic image 206.

The front protective transparent plate 201 has two sides: external and internal. The external side is the external surface of the decorative tile. The inner side of the mentioned plate is connected with transparent film 202. At the edges of the mentioned plate is connected to the end protective layer 203. The front protective transparent plate can be made of various materials (for example, glass, plastic, etc.) and, in combination with the end protective layer and the rear protective layer, provides protection of the lenticular sheet and stereoscopic image are located under them from external influences. The front protective transparent plate 201 can be covered with optically transparent laminate, protective compounds and / or additionally processed (for example, glass hardening).
During exploitation, the external side of the mentioned plate may be subjected to polishing and other types of restoration work without deterioration of the perception of the three-dimensional and dynamic effects and appearance of products.

The end protective layer 203 can be made of metal, plastic, film, grid, ceramic, paper, wood, resin, paint coatings and / or similar materials. At the same time, the end protective layer contains in its lower part protruding ends to which it is attached a stereoscopic image 206. This version of decorative tiles designed for translucent structures and attached to the carrier surfaces with only the end protective layer.

The mentioned transparent film 202 is attached to the internal side of the front protective transparent plate 201 and provides additional strength of the mentioned plate 201 and UV protection of the stereoscopic image 206.

The lenticular sheet 205 is located above the stereoscopic image 206. At the same time, the lenticular sheet is positioned in such a way that on the one side between it and the transparent film 202 and on the other side between it and the stereoscopic image 206 are air gaps, that provides stereoscopic and dynam ic display of a stereoscopic image 206. The lenticular sheet 205 consists of lens elements that can be manufactured from mirror-glossy plastics, silicate glass and other materials, 0.05 mm or more thick.

The mentioned stereoscopic image 206 is attached to attached to protruding ends in the lower part of the end protection layer 203. Stereoscopic image is a drawing that includes parts of two or more whole images that are displayed separately under the influence of the lenticular sheet 205 depending on the viewing angle, or a drawing that includes parts of a three-dimensional image, the different visual planes of which are also displayed separately under the influence of the lenticular sheet 205 depending on the viewing angle.

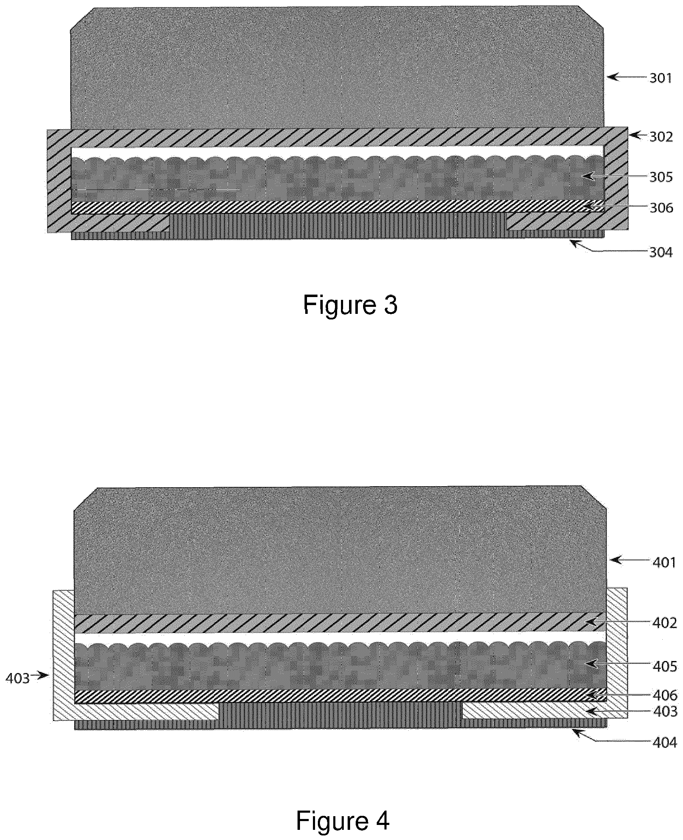

Further with reference to Fig.3 it will be given an another example of implementation of decorative tile with stereoscopic and dynamic display. Decorative tiles with stereoscopic and dynamic display consists of a front protective transparent plate 301, transparent film 302, end protective layer 303, lenticular sheet 305, stereoscopic image 306 and the rear protective layer 304.

The front protective transparent plate 201 has two sides: external and internal. The external side is the external surface of the decorative tile. The inner side of the mentioned plate is connected with transparent film 202. The front protective transparent plate can be made of various materials (for example, glass, plastic, etc.) and, in combination with the end protective layer and the rear protective layer, provides protection of the lenticular sheet and stereoscopic image are located under them from external influences. The front protective transparent plate 201 can be covered with optically transparent laminate, protective compounds and / or additionally processed (for example, glass hardening).
During exploitation, the external side of the mentioned plate may be subjected to polishing and other types of restoration work without deterioration of the perception of the three-dimensional and dynamic effects and appearance of products.

The rear protective layer 304 also has two sides: the external and internal. The external side is the external surface of decorative tiles and provides fixing of decorative tiles to different surfaces. The rear protective layer 104 can be made of metal, plastic, film, grid, ceramic, paper, wood, resin, paint coatings and / or similar materials.

The transparent film 302 is attached to the internal side of the front protective transparent plate 301 and provides additional strength of the mentioned plate 301 and UV protection of the stereoscopic image 306. Transparent film 302 can be made of various plastics and other transparent materials. When in this case, the mentioned protective film 302 is an end protective an element of decorative tiles, and in combination with the face protective transparent plate 301 and the back protective layer 304 form a single sealed protective housing, which contains the mentioned stereoscopic image 306 and lenticular sheet 305. The transparent film connects its edges to the stereoscopic image 306 on one side and the rear protective layer 304 on the other side, and thus provides end protection of the decorative tiles. Between the mentioned transparent film and the lenticular sheet 305, above which it is located, an air gap is formed, which provides stereoscopic and dynamic display stereoscopic image 306.

The lenticular sheet 305 is located above the stereoscopic image 306 and consists of lens elements that can be manufactured from mirror-glossy plastics, silicate glass and other materials, 0.05 mm or more thick.

The mentioned stereoscopic image 306 is attached to the internal side of the rear protective layer 304 and to the edges of the transparent film 302. Stereoscopic image is a drawing that includes parts of two or more whole images that are displayed separately under the influence of the lenticular sheet 305 depending on the viewing angle, or a drawing that includes parts of a three-dimensional image, the different visual planes of which are also displayed separately under the influence of the lenticular sheet 305 depending on the viewing angle.

Further with reference to Fig.4 it will be given an another example of implementation of decorative tile with stereoscopic and dynamic display. Decorative tiles with stereoscopic and dynamic display consists of a front protective transparent plate 401, transparent film 402, end protective layer 403, rear protective layer 404, lenticular sheet 405 and stereoscopic image 406.

The front protective transparent plate 401 has two sides: external and internal. The external side is the external surface of the decorative tile. The inner side of the mentioned plate is connected with transparent film 402. At the edges of the mentioned plate is connected to end protective layer 403. The front protective transparent plate can be made of various materials (for example, glass, plastic, etc.) and, in combination with the end protective layer and the rear protective layer, provides protection of the lenticular sheet and stereoscopic image are located under them from external influences. The front protective transparent plate 401 can be covered with optically transparent laminate, protective compounds and / or additionally processed (for example, glass hardening). During exploitation, the external side of the mentioned plate may be subjected to polishing and other types of restoration work without deterioration of the perception of the three-dimensional and dynamic effects and appearance of products.

The end protective layer 403 can be made of metal, plastic, film, grid, ceramic, paper, wood, resin, paint coatings and / or similar materials. Mentioned the end protective layer has two sides: external and internal. External side it is located perpendicular to the internal side and is located on the ends decorative tiles, thus providing end protection of a decorative tile. The internal side is rigidly connected to the rear protective layer 404 and thus provides the strength of the entire structure.

The rear protective layer 404 also has two sides: the external and internal. The external side is the external surface of decorative tiles and provides fixing of decorative tiles to different surfaces. Collectively referred to as facial protection transparent plate 401, end protective layer 403 and rear protective layer 404 forms a single sealed protective housing in which are located the above-mentioned stereoscopic image 406, transparent film 402 and lenticular sheet 405.

The rear protective layer 404 can be made of metal, plastic, film, grid, ceramic, paper, wood, resin, paint coatings and / or similar materials.

The mentioned transparent film 102 is attached to the internal side of the front protective transparent plate 101 and provides additional strength of the mentioned plate 101 and UV protection of the stereoscopic image 106.

The lenticular sheet 405 is located above the stereoscopic image 406. At the same time, the lenticular sheet is positioned in such a way that on the one side between it and the transparent film 402 there is an air gap, that provides stereoscopic and dynamic display of a stereoscopic image 406. The lenticular sheet 405 consists of lens elements that can be manufactured from mirror-glossy plastics, silicate glass and other materials, 0.05 mm or more thick.

The mentioned stereoscopic image 406 is attached to the internal side of the rear protective layer 404. Stereoscopic image is a drawing that includes parts of two or more whole images that are displayed separately under the influence of the lenticular sheet 405 depending on the viewing angle, or a drawing that includes parts of a three-dimensional image, the different visual planes of which are also displayed separately under the influence of the lenticular sheet 405 depending on the viewing angle.

Although this invention has been shown and described with reference on certain variants of its implementation, a specialist in this field of technology, it will be clear that various changes and modifications can be made in it without leaving the actual scope of the invention which is defined in the appended claim.

## Claims

1. Decorative tile with stereoscopic and dynamic display that includes:
- a front protective transparent plate (101; 201; 301; 401) with an external and internal side;
- end protective layer (103; 203; 303; 403);
- transparent film (102; 202; 302; 402);
- the rear protective layer (104; 204; 304; 404), which has an external and internal side;
- stereoscopic image (106; 206; 306; 406);
- lenticular sheet (105; 205; 305; 405) located above the stereoscopic image, wherein:
- the front protective transparent plate (101; 201; 301; 401) with its internal side is connected to a transparent film (102; 202; 302; 402), and its edges is connected with the end protective layer (103; 203; 303; 403) which, in turn, is connected to the rear protective layer (104; 204; 304; 404),
- the rear protective layer (104; 204; 304; 404) with its internal side is connected with the stereoscopic image (106; 206; 306; 406), above which it is located a lenticular sheet (105; 205; 305; 405), where between the mentioned lenticular sheet (105; 205; 305; 405) and the transparent film (102; 202; 302; 402) there is an air gap, which provides a stereoscopic and dynamic display of the stereoscopic image (106; 206; 306; 406),
- wherein the mentioned transparent film (102; 202; 302; 402) provides additional strength to the mentioned protective transparent plate (101; 201; 301; 401) and UV protection to the stereoscopic image (106; 206; 306; 406), and the front protective transparent plate (101; 201; 301; 401), the end protective layer (103; 203; 303; 403) and the rear protective layer (104; 204; 304; 404) form a single sealed protective housing, in which the mentioned stereoscopic image (106; 206; 306; 406), transparent film (102; 202; 302; 402) and lenticular sheet (105; 205; 305; 405) are located.

## Patentansprüche

1. Dekorative Fliese mit stereoskopischer und dynamischer Anzeige, die umfasst:
- eine vordere transparente Schutzplatte (101; 201; 301; 401) mit einer Außen- und einer Innenseite;
- Endschutzschicht (103; 203; 303; 403);
- transparenten Film (102; 202; 302; 402);
- die hintere Schutzschicht (104; 204; 304; 404), die eine Außen- und eine Innenseite aufweist;
- stereoskopisches Bild (106; 206; 306; 406);
- Lentikularfolie (105; 205; 305; 405), die sich über dem stereoskopischen Bild befindet, wobei:
- von der vorderen transparenten Schutzplatte (101; 201; 301; 401) mit ihrer Innenseite mit einem transparenten Film (102; 202; 302; 402) verbunden ist und die Ränder bzw. Kanten mit der Endschutzschicht (103; 203; 303; 403) verbunden ist bzw. sind, die wiederum mit der hinteren Schutzschicht (104; 204; 304; 404) verbunden ist,
- die hintere Schutzschicht (104; 204; 304; 404) mit ihrer Innenseite mit dem stereoskopischen Bild (106; 206; 306; 406) verbunden ist, über dem sich eine Lentikularfolie (105; 205; 305; 405) befindet, wo zwischen der genannten Lentikularfolie (105; 205; 305; 405) und dem transparenten Film (102; 202; 302; 402) ein Luftspalt vorhanden ist, der eine stereoskopische und dynamische Anzeige des stereoskopischen Bildes (106; 206; 306; 406) bereitstellt,
- wobei der genannte transparente Film (102; 202; 302; 402) der genannten transparenten Schutzplatte (101; 201; 301; 401) zusätzliche Festigkeit und dem stereoskopischen Bild (106; 206; 306; 406) UV-Schutz verleiht, und die vordere transparente Schutzplatte (101; 201; 301; 401), die Endschutzschicht (103; 203; 303; 403) und die hintere Schutzschicht (104; 204; 304; 404) ein einzelnes bzw. einziges abgedichtetes Schutzgehäuse bilden, in dem sich das genannte stereoskopische Bild (106; 206; 306; 406), der transparente Film (102; 202; 302; 402) und die Lentikularfolie (105; 205; 305; 405) befinden.

## Revendications

1. Carreau décoratif avec une représentation stéréoscopique et dynamique qui inclut :
- une plaque avant de protection transparente (101 ; 201 ; 301 ; 401) avec un côté externe et interne ;
- une couche de protection d'extrémité (103 ; 203 ; 303 ; 403) ;
- un film transparent (102 ; 202 ; 302 ; 402) ;
- la couche de protection arrière (104 ; 204 ; 304 ; 404) qui comprend un côté externe et interne ;
- une image stéréoscopique (106 ; 206 ; 306 ; 406) ;
- une feuille lenticulaire (105 ; 205 ; 305 ; 405) située au-dessus de l'image stéréoscopique, dans lequel :
- la plaque avant de protection transparente (101 ; 201 ; 301 ; 401) avec son côté interne est reliée à un film transparent (102 ; 202 ; 302 ; 402), et ses arêtes est reliée à la couche de protection d'extrémité (103 ; 203 ; 303 ; 403) qui, à son tour, est reliée à la couche de protection arrière (104 ; 204 ; 304 ; 404),
- la couche de protection arrière (104 ; 204 ; 304 ; 404) avec son côté interne est reliée à l'image stéréoscopique (106 ; 206 ; 306 ; 406), au-dessus de laquelle est située une feuille lenticulaire (105 ; 205 ; 305 ; 405), où entre la feuille lenticulaire mentionnée (105 ; 205 ; 305 ; 405) et le film transparent (102 ; 202 ; 302 ; 402) se trouve une fente d'air qui fournit une représentation stéréoscopique et dynamique de l'image stéréoscopique (106 ; 206 ; 306 ; 406),
- dans lequel le film transparent mentionné (102 ; 202 ; 302 ; 402) fournit une résistance supplémentaire à la plaque de protection transparente mentionnée (101 ; 201 ; 304 ; 401) et une protection aux UV à l'image stéréoscopique (106 ; 206 ; 306 ; 406), et la plaque avant de protection transparente (101 ; 201 ; 301 ; 401), la couche de protection d'extrémité (103 ; 203 ; 303 ; 403) et la couche de protection arrière (104 ; 204 ; 304 ; 404) forment un seul logement de protection scellé, dans lequel l'image stéréoscopique mentionnée (106 ; 206 ; 306 ; 406), le film transparent (102 ; 202 ; 302 ; 402) et la feuille lenticulaire (105 ; 205 ; 305 ; 405) sont situés.
